(19) Europäisches Patentamt
European Patent Office
Office européen des brevets

(11) EP 0 859 494 A2

(12) EUROPEAN PATENT APPLICATION

(43) Date of publication:
19.08.1998 Bulletin 1998/34

(51) Int. Cl.[6]: H04L 27/26

(21) Application number: 98102595.0

(22) Date of filing: 16.02.1998

(84) Designated Contracting States:
AT BE CH DE DK ES FI FR GB GR IE IT LI LU MC NL PT SE
Designated Extension States:
AL LT LV MK RO SI

(30) Priority: 17.02.1997 JP 31609/97

(71) Applicant:
MATSUSHITA ELECTRIC INDUSTRIAL CO., LTD.
Kadoma-shi, Osaka-fu (JP)

(72) Inventors:
- Hayashino, Hiroshi
Himeji-shi, Hyogo-ken (JP)
- Harada, Yasuo
Kobe-shi, Hyogo-ken (JP)
- Kimura, Tomohiro
Kawachinagano-shi, Osaka-fu (JP)
- Shirakata, Naganori
Ibaraki-ken, Osaka-fu (JP)

(74) Representative:
Altenburg, Udo, Dipl.-Phys. et al
Patent- und Rechtsanwälte,
Bardehle . Pagenberg . Dost . Altenburg .
Frohwitter . Geissler & Partner,
Galileiplatz 1
81679 München (DE)

(54) **Synchronisation of the local oscillator in multicarrier systems**

(57) An OFDM transmission system for communicating an OFDM signal (Vmo1) generated from a complex vector data (Vms) comprised of predetermined number of data symbols (DS) therein. An OFDM modulating apparatus (MP) is provided for generating the OFDM signal (Vmo1) comprised of reference symbol (RS) indicative of phase information inserted therein at a predetermined number (N-1)of symbols (DS). An OFDM demodulating apparatus (DP) is also provided for demodulating the OFDM signal (Vmo) based on the reference symbol (RS) inserted that OFDM signal (Vmo).

FIG. 1

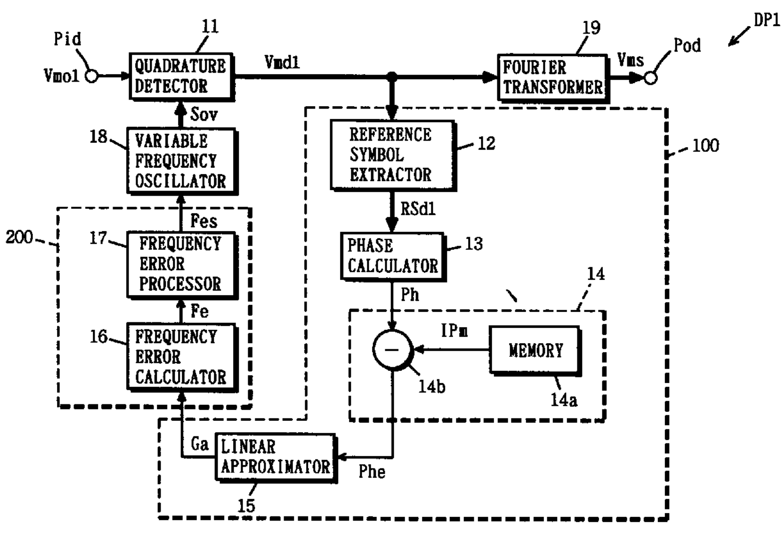


EP 0 859 494 A2

## Description

BACKGROUND OF THE INVENTION

Field of the Invention

The present invention relates to an Orthogonal Frequency Division Multiplex (OFDM) Transmission System exchanging an OFDM signals between a transmission side and a receiving side and, more particularly, to a phase compensation as well as a frequency synchronization of a frequency oscillator used therein.

Related Art Statement

Recently, a data transmission system utilizing an Orthogonal Frequency Division Muitiplexing (OFDM) technology is remarkably noticed as an effective means for the application of a digital sound broadcasting for the movable terminals and a terrestrial digital television broadcasting. The OFDM technology is a multi-carrier modulation system used for the data transmission between a transmitting station and a receiving station.

On the transmitting station side, an original complex data is assigned to a lots of sub-carriers orthogonal to each other on a frequency axis. These assigned complex data are applied with the Fourier transformation to convert themselves into an OFDM signal that is a digital signal modulated in time domain. Thus generated OFDM signal is transmitted to the receiving station.

On the receiving station side, the OFDM signal from the transmitting station is applied with the processes substantially the same as those, but in a reversed order, applied on the transmitting station. As a result, the original complex data is reproduced from the OFDM signal. Since each modulated data assigned to sub-carrier have longer periods, the OFDM signal is well proof against bad influences due to superposition of signals having waves delayed from the direct wave in multi-paths.

With reference to Figs. 12 and 13, an example of conventional OFDM signal transmission system disclosed by the Japanese Laid-Open Patent Publication No. H7-143096 (Not examined) will described herebelow. The conventional OFDM signal transmission system is constructed by an OFDM modulation apparatus MC used on a transmission side for modulating an original complex data into the generating an OFDM signal, and an OFDM demodulation apparatus DC used on a receiving side for demodulating the OFDM signal to the original complex data.

As shown in Fig. 12, the conventional OFDM modulation apparatus MC includes an input terminal Pim, an inverse Fourier transformer 91, a quadrature modulator 92, a local oscillator 93, and an output terminal Pom. The local oscillator 93 generates a local oscillating signal So. The input terminal Pim is connected a complex data source externally provided (not shown in Fig. 12) for receiving the original complex data Vms therefrom. The inverse Fourier transformer 91 is connected to the input terminal Pim for receiving the original complex data Vms therefrom. The inverse Fourier transformer 91 assigns the original complex data Vms, by every symbol included therein, to plural sub-carriers orthogonal to each other on the frequency axis. The inverse Fourier transformer 91 applies the inverse Fourier transformation process to those assigned modulated vector signals Vms which are signals in frequency domain to convert into signals in time domain, and generates a base band OFDM signal Vmr.

The quadrature modulator 92 is connected to the inverse Fourier transformer 91 and the local oscillator 93 for receiving the base band OFDM signal Vmr and the local oscillating signal So, respectively, therefrom. Based on the oscillating signal So, the quadrature modulator 92 performs the orthogonal transformation of the base band OFDM signal Vmr, and then a frequency of the orthogonal transformed base band OFDM signal Vmr is converted to generate an OFDM (orthogonal frequency division multiplexed) signal Vmo having frequency in a middle frequency range or a radio frequency range. The output terminal Pom is connected to the quadrature modulator 92 for receiving the OFDM signal Vmo therefrom to supply thereof to the transmitter of the transmission station (not shown in Fig. 12).

In Fig. 13, the OFDM demodulating apparatus DC used for demodulating the OFDM signal Vmo generated by the OFDM modulating apparatus MC is shown. The OFDM demodulating apparatus DC includes an input terminal Pid, an quadrature detector 101, a Fourier transformer 102, a demodulated data analyzer 103, a frequency controller 104, a local oscillator 105, and an output terminal Pod. The local oscillator 105 generates a local oscillating signal So'. Note that the local oscillating signal So' has a frequency similar to, but is not the same as that of the signal So generated by the oscillator 93 of the OFDM modulating apparatus MC (Fig. 12). This frequency difference between two local oscillating signals essentially comes from the variation of quartz crystals each used therein.

The input terminal Pid is connected a receiver of the receiving station (not shown in Fig. 13) for receiving the OFDM signal Vmo therefrom. The quadrature detector 101 is connected to the input terminal Pid and the local oscillator 105 for receiving the OFDM signal Vmo and the local oscillating signal So' therefrom, respectively. The quadrature detector 101 performs the orthogonal detection of OFDM signal Vmo based on the local oscillating signal So' to generate a base-band OFDM signal Vmb.

The Fourier Transformer 102 is connected to the quadrature detector 101 for receiving the base-band OFDM signal Vmb therefrom. The Fourier Transformer 102 applies a Fourier Transforming to the OFDM signal Vmb by every symbol therein to generate a complex detection signal Vmd which will be output therefrom as the original complex data Vms demodulated from the OFDM signal Vmo.

The output terminal Pod and the demodulated data analyzer 103 are connected to the Fourier Transformer 102 for receiving the demodulated complex signal Vmd therefrom. As described in the above, since the local oscillating signal So used for the modulating apparatus MC has a frequency different from that of the local oscillating signal So' used for the demodulating apparatus DC, the demodulated complex data Vmd is not the same as the original complex data Vms with respect to the frequency. This difference in frequency disables the reproduction of the information included in the original complex data Vms from the demodulated complex data Vmd.

The demodulated complex data Vmd is transferred outward through the output terminal Pod. The demodulated data analyzer 103 extracts a demodulated vector from the demodulated complex data Vmd over more than two different sub-carriers, and obtains a frequency error of the local oscillating signal So' for the orthogonal detection based on that phase shift of thus obtained demodulated complex data Vmd to generate a frequency error signal Sfe.

This process utilizes the phenomena that the phase sift angle of the demodulated complex data, converted from the OFDM signal Vmo by the Fourier transformer 102, can be determined by the error of frequency detection, and that the frequency of sub-carrier contributes to the phase shift angle of demodulated complex data Vmd caused by the frequency detection error. Since the demodulated complex data Vmd also contains the phase shift peculiar to the modulation process itself, the demodulated data analyzer 103 detects the phase shift angle by superimposing the demodulated complex data Vmd over plural symbols.

The frequency controller 104 is connected to the demodulated data analyzer 103 for receiving the frequency error signal Sfe to generate a frequency control signal Sfc. The local oscillator 105 is connected to the frequency controller therefrom for receiving the frequency control signal Sfc therefrom to generate the local oscillating signal So' having a frequency determined based on that signal Sfc. Thus, the frequency controller 104 controls the frequency of the local oscillating signal So', supplied to the quadrature detector 101 for the orthogonal detection, based on the frequency error signal Sfe fed from the demodulated data analyzer 103 to compensate the frequency difference between both the oscillating signal So and So'.

In the conventional OFDM demodulating apparatus DC, however, the Fourier transformation of the OFDM signal Vmb is performed under the condition where the local oscillating signal So' whose frequency shifted from the direct wave is used for the orthogonal detection of OFDM signal Vmo. Therefore, a mutual interference between sub-carriers is inevitable in the demodulated complex data Vmd, disabling the demodulated data analyzer 103 to obtain the demodulated vector accurately. Consequently, the local oscillator 105 can not generate the local oscillating signal So' accurately, disabling the original complex data Vms from being reproduced from the OFDM signal Vmo.

Furthermore, due to the mutual interference between sub-carriers in the demodulated complex data Vmd even when a broadband synchronization, it is impossible to obtain the phase or phase shift correctly, but possible to obtain a frequency synchronization in a narrow band within an interval between two sub-carriers.

Still further, if each sub-carrier is multi-level demodulated such as 64 quadrature amplitude modulation (64QAM), analysis of demodulated vector is subject to errors by thermal noises and others. Specifically, the demodulated data analyzer 103 can not determine the local oscillating signal So' correctly.

The prevent invention aims to solve the above mentioned problems by providing an OFDM transmission system which can ensure a broadband synchronization and a correction of phase shift even when a local oscillating signal for the orthogonal detection of OFDM signal is shifted from the direct wave.

## SUMMARY OF THE INVENTION

The object of the present invention is therefore to provide an orthogonal frequency division multiplex (OFDM) transmission system which solves these problems.

In order to achieve the aforementioned objective, an OFDM transmission system for communicating an OFDM signal generated from a first complex vector data comprised of predetermined number of data symbols therein comprises an OFDM modulating means for generating said OFDM signal comprised of reference symbol indicative of phase information inserted therein at a predetermined number of symbols; and an OFDM demodulating means for demodulating said OFDM signal based on said inserted reference symbol.

## BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:

Fig. 1 is a block diagram showing an OFDM demodulating apparatus according to a first embodiment of the present invention;

Fig. 2 is a graph schematically showing a frame construction of OFDM demodulated signal supplied to the OFDM demodulating apparatus of Fig. 1;

Fig. 3 is a block diagram showing an OFDM demodulating apparatus according to the second embodiment of the present invention;

Fig. 4 is a block diagram showing an OFDM demodulating apparatus according to the third embodiment of the present invention;

Fig. 5 is a graph in assistance of explaining the construction of reference complex vector inserted into the OFDM signal according to the third embodiment of the present invention;

Figs. 6 and 7 are graphs in assistance of explaining the phase shift of the reference complex vector according to the third embodiment of the present invention;

Fig. 8 is a block diagram showing an OFDM demodulating apparatus according to the fourth embodiment of the present invention;

Fig. 9 is a block diagram showing an OFDM demodulating apparatus according to the fifth embodiment of the present invention;

Fig. 10 is a block diagram showing an OFDM modulating apparatus according to the first embodiment of the present invention;

Fig. 11 is a block diagram showing an OFDM modulating apparatus according to the third embodiment of the present invention;

Fig. 12 is a block diagram showing a conventional OFDM modulating apparatus; and

Fig. 13 is a block diagram showing a conventional OFDM demodulating apparatus.

DETAILED DESCRIPTION OF THE PREFERRED EMBODIMENTS

With reference to Figs. 1 through 11, the OFDM transmission system according to the present invention will be described herebelow.

(First embodiment)

First, with reference to Figs. 1, 2, and 10, an OFDM transmission system according to a first embodiment of the present invention will be described. Referring to Fig. 2, a frame structure of OFDM demodulated signal used in this embodiment is shown. A first OFDM demodulated signal Vmo1 is comprised of predetermined number of frames, each including predetermined number N, an integer more than 2, of symbols. Provided at the head of each frame is a reference symbol RS, and followings are N-1 number of data symbols DS1 to DSN-1.

Referring to Fig. 10, an OFDM modulating apparatus used in the OFDM transmission system, according to this embodiment, for generating the OFDM modulated vector signal Vmo1 is shown. The OFDM modulation apparatus MP1 includes an input terminal Pim, a reference symbol inserting unit 71, a memory 72, an inverse Fourier transformer 73, an quadrature modulator 74, a local oscillator 75, and an output terminal Pom. The local oscillator 75 generates a local oscillating signal So. The memory 72 stores reference symbol RS for the OFDM signal therein, and outputs its as a reference symbol data Sm to the reference symbol inserting unit 71 connected thereto. The input terminal Pim is connected a complex data source externally provided (not shown in Fig. 10) for receiving complex data Vms therefrom.

The reference symbol inserting unit 71 is also connected to the input terminal Pim for receiving the complex data Vms therefrom, and inserts the reference symbol RS into every N-1 number of data symbols DS of the modulated vector signal Vms. Thus, a second complex data Vmf having frames FR each comprised of N number of symbols is generated.

The inverse Fourier transformer 73 is connected to the reference symbol inserting unit 71 for receiving every symbol of the second complex data Vmf therefrom. The inverse Fourier transformer 91 assigns every symbols of the complex data Vmf to plural sub-carriers, and performs inverse Fourier transformation of those assigned complex data Vmf. Thus, the second complex data Vmf in frequency domain is converted into a base-band OFDM signal Vmfr in a time domain.

The quadrature modulator 74 is connected to the inverse Fourier transformer 73 and the local oscillator 75 for receiving the base-band OFDM signal Vmfr and the oscillating signal So, respectively, therefrom. The quadrature modulator 74 performs orthogonal modulation of the base-band OFDM signal Vmfr based on the oscillating signal So. As a result, the base-band OFMD signal Vmfr is converted into a signal of intermediate frequency range or radio frequency range, and is output as the OFDM signal Vmo1 therefrom to the output terminal Pom. This OFDM signal Vmo1 is further transferred to an OFDM receiving apparatus through a transmission path.

Referring to Fig. 1, an OFDM demodulating apparatus also used in the OFDM transmission system, according to this embodiment, for demodulating the OFDM signal Vmo1 into the original digital data Vms is shown. The OFDM demodulating apparatus DP includes an input terminal Pid, a quadrature detector 11, a phase difference detector 100, a frequency error detector 200, a variable frequency oscillator 18, a Fourier Transformer 19, and an output terminal Pod. The input terminal Pid is connected to a receiver of the receiving station (not shown in Fig. 1) for receiving the OFDM signal Vmo1 therefrom. The variable frequency oscillator 18 generates an oscillating signal Sov whose frequency is variable. The phase error detector 100 includes a reference symbol extractor 12, a phase calculator 13, a memory 14a, a subtracter 14b, a phase difference calculator 14, and a linear approximator 15. The frequency error detector 200 includes a frequency error calculator 16 and a frequency error calculator 17.

The quadrature detector 11 is connected to the input terminal Pid and the variable frequency oscillator 18 for receiving the OFDM signal Vmo1 and the variable oscillating signal Sov, respectively , therefrom. The quadrature detector 11 orthogonally detects the OFDM signal Vmo1 based on the variable oscillating signal Sov to generate a complex detection signal Vmd1.

The reference symbol extractor 12 of the phase error detector is connected to the quadrature detector 11 for receiving the complex detection signal Vmd1 therefrom. The reference symbol extractor 12 extracts only reference symbols RS from the complex detection signal Vmd1 based on a symbol synchronization signal internally generated therein, and outputs the extracted symbols RS as an extracted reference symbol data RSd1. The phase calculator 13 is connected to the reference symbol extractor 12 for receiving the extracted reference symbol data RSd1 therefrom. The phase calculator 13 calculates the phase Ph of each reference symbol RSd1 extracted from the complex detection signal Vmd1 under the following equation (1).

$$Ph = \arctan (Im/Re) \qquad (1),$$

wherein Im is a real part, and Re is an imaginary part of the reference symbol RS of the complex data Vmd1.

Provided is the memory 14a previously storing the phase IPm of reference symbols *RSVmf* inserted in the complex data signal Vmf by the OFDM modulating apparatus MP1 shown in Fig. 10. The subtracter 14b is provided between the phase calculator 13 and the linear approximator 15 for receiving the phase Ph from the calculator 13, and is connected to the memory 14a for receiving the phase information IPm therefrom. The subtracter 14b makes a subtraction of phase IPm of complex data signal Vmf on transmitting side and phase Ph of complex detection signal Vmd1 on receiving side, and obtains the phase error Phe that is difference therebetween. Thus, the memory 14a and subtracter 14b construct a phase difference calculator 14 connected to the phase error calculator 14 for receiving the calculated phase Ph therefrom to calculate a phase difference Phe between the second complex data Vmf and the complex detection signal Vmd1 in phase.

The linear approximator 15 is connected to the phase difference calculator 14 for receiving the phase error Phe therefrom. The linear approximator 15 approximates the phase difference Phd to a linear characteristics which can be expressed as a direct function of time for suppressing noise components in the phase difference. The linear approximator 15 outputs the gradient Ga of such approximated line.

The frequency error calculator 16 of the frequency error detector 200 is connected to the linear approximator 15 for receiving the gradient Ga therefrom. Based on this gradient Ga, the frequency error calculator 16 calculates a frequency error Fe of the complex detection signal Vmd1.

The frequency error processor 17 is connected to the frequency error calculator 16 for receiving the frequency error Fe therefrom. The frequency error processor 17 applying the frequency error Fe to smooth thereof over plural frames, and generates a smoothed frequency error Fes.

The variable frequency oscillator 18 is connected to the frequency error processor 17 for receiving the smoothed frequency error Fes therefrom. The variable frequency oscillator 18 generates the oscillating signal Sov having frequency variable according to the smoothed frequency error Fes. Based on the frequency varied signal Sov, the quadrature detector 11 can detect the OFDM signal Vmo1.

Thus, the complex detection signal Vmd1 is generated by detecting the OFDM signal Vmo1 with respect to the oscillating signal Sov whose frequency error is corrected by the phase error detector 100 and frequency error detector 200 before the Fourier transformation by the Fourier transformer 19. Therefore, the original complex data Vms demodulated from the complex data Vmd1 is secured it's broadband synchronization.

Herebelow, the operation of the demodulating apparatus DP1 will be described. According to this embodiment, the reference symbol *RSVmo1(t)* in the OFDM signal Vmo1 is expressed by the following equation (2).

$$RSVmo1(t)=RSVmfr(t) \cdot \exp(j \cdot 2\pi(fc+\Delta f)\ t) + NVmo1(t) \qquad (2),$$

wherein *RSVmfr(t)* is a reference symbol RS of the base-band OFDM signal Vmfr, t is time, j is a complex, fc is a frequency of the oscillating signal Sov output from the variable frequency oscillator 18, *NVmo1(t)* is noise occurred in transmission path from the modulating apparatus MC1 to the demodulating apparatus DP1, and Δf is a frequency error caused by the variation of quartz crystal in a tuner of receiver.

The reference symbol *RSVmd1(t)* in the complex detection signal Vmd1 is expressed by the following equation (3).

$$RSVmd1(t) = RSVmfr(t) \cdot \exp(j \cdot 2\pi\Delta ft) + NVmd1(t) \quad (3),$$

wherein *NVmd1(t)* is noise occurred in a transmission path just after the quadrature detector 11. The reference symbol extractor 12 outputs the reference symbol *RSVmd1(t)* as the extracted reference symbol data RSd1.

The phase $\phi Vmd1(t)$ of reference symbol *RSVmd1(t)* on the receiving side is expressed by the following equation (4).

$$\phi Vmd1(t) = \arctan(RSVmd1(t)) \quad (4).$$

The phase calculator 13 outputs the reference symbol *RSVmd1(t)* as the phase data Ph.

The phase calculator 14 calculates the phase $\phi Vmd1(t)$ of the reference symbol *RSVmd1(t)* utilizing the above equations (3) and (4), as expressed as the following equation (5).

$$\phi Vmd1(t) = \phi Vmo1(t) + 2\pi\Delta ft + \phi NVmd1(t) \quad (5),$$

where $\phi Vmo1(t)$ is a phase of reference symbol *RSVmo1* on the transmitting side, and $\phi NVmd1(t)$ is a phase component of noise *NVmo1(t)*. Note that $\phi Vmo1(t)$ is previously stored in the memory 14a as the phase data IPm.

Then, the subtracter 14b makes a subtraction of the phases $\phi Vmo1(t)$ and $\phi Vmd1(t)$ to produce a phase difference $\Delta\phi(t)$, and outputs the product as the phase error Phe. The phase difference $\Delta\phi(t)$ can be expressed by the following equation (6).

$$\Delta\phi(t) = 2\pi\Delta ft + \phi NVmd1(t) \quad (6).$$

The linear approximator 15 approximates the phase error Phe to a linear characteristics, as typically expressed by the equation (6), to suppress noise components $\phi NVmd1(t)$. Then the approximator 15 asses the gradient $\alpha$ of the approximated line by utilizing the least squares method. The assessed gradient $\alpha$, expressed by the equation (7), is output as the Gradient data Ga.

$$\alpha = 2\pi\Delta f \quad (7).$$

The frequency error calculator 16 obtains the frequency difference $\Delta f$ utilizing the equation (7), and outputs it as the frequency error Fe. The frequency error processor 17 applies any one of the following four different processes (Process 1 to Process 4) to the frequency error Fe to adjust thereof. Thus, adjusted frequency error Fe is output as the smoothed frequency error Fes.

Process 1: None.
Process 2: Averaging the frequency error over plural frames to smooth.
Process 3: Set a predetermined frequency for deleting the frequency error according to a sign of frequency error.
Process 4: Gain control of frequency error by an amplifier.

The variable frequency oscillator 18 controls the frequency fc of the local oscillating signal Sov, generated by itself, according to the smoothed frequency error signal Fes. Thus, the local oscillating signal Sov having the correct frequency fc is supplied to the quadrature detector 11. As apparent from the above, since the frequency error is detected and corrected before Fourier Transformation according to this embodiment, the frequency error can be detected correctly even if the frequency varies drastically within the tuner of the receiver, enabling a very accurate frequency synchronization.

Furthermore, the frequency error Fe is determined based on the gradient Ga of line, a direct function of time, approximated to the phase error Phe of reference symbols RS. Therefore, even in the case that the frequency difference $\Delta f$ is bigger than the sub-carrier interval, the gradient Ga of approximated line simply becomes larger, enabling the correct detection of the frequency error Fe. Thus, the frequency synchronization can be secured in a broadband. Still further, frequency error detection using the reference symbols is always correct regardless of the modulation method of sub-carriers.

(Second Embodiment)

Referring to Fig. 3, an OFDM demodulating apparatus according to a second embodiment of the present invention is shown. The OFDM demodulating apparatus DP2 in Fig. 3 has a construction similar to that shown in Fig. 1. However, the variable frequency oscillator 18 is replaced by a local frequency oscillator 18a for generating a first local oscillating signal Sov1 having a fixed frequency; and a complex multiplier 18c and a variable frequency oscillator 18b for generating a second local oscillating signal Sov2 having a variable frequency are additionally provided. The output of the frequency error detector 200 is connected to the variable frequency oscillator 18b. From the equation (2) in the above, first and second oscillaing signal Sov1 and Sov2 are can be introduced as $Sov1=\exp(j \cdot 2\pi fc\ t)$ and $Sov2=\exp(j \cdot 2\pi\Delta f\ t)$, respectively.

In operation, the quadrature detector 11 performs the quadrature detection of the OFDM signal Vmo1 based on the first local oscillating signal Sov1 to produce a complex detection signal Vmd1'. The reference symbol extractor 12, phase calculator 13, phase error calculator 14, and linera approximator 15 of the phase error detector 100 produces the reference symbol data RSd1', phase data Ph, phase error data Phe, and gradient data Ga, respectively, in the same manner as in the first embodiment. Similarly, the frequency error calculator 16 of the frequency error detector 200 produces the data Fe. However, the frequency error processor 17 applies either one of the Process 1 and Process 2 to the frequency error Fe and outputs the smoothed frequency error data Fes.

The variable frequency oscillator 18b controls the frequency of the second local oscillating signal Sov2 with respect to the smoothed frequency error data Fes, and supplies the phase variation vector to the complex multiplier 18c. This phase variation vector is a complex vector which can be expressed as a function of $\exp(j2\pi\Delta ft)$ . Note that the complex multiplier 18c applies the complex multiplication of the phase variation vector to the complex detection data Vmd1' to remove the phase variation due to frequency error included therein. As a result, the phase variation corresponding to the frequency error can be removed from the complex detection signal even when the frequency varies so badly in the receiver.

(Third Embodiment)

Referring to Fig. 11, an OFDM modulating apparatus for producing an OFDM signal Vmo2 used in an OFDM transmission system according to the third embodiment of the present invention is shown. The OFDM modulating apparatus MP2 has a construction similar to that of the apparatus MP1 in Fig. 10, but a reference complex vector inserting unit 76 and a complex multiplier 77 are additionally inserted between the input terminal Pim and the reference symbol inserting unti 71. Furthermore, the Memory 72 is connected to both the complex multipllier 77 and the reference symbol inserting unit 71 for supplying the reference symbol data Sm thereto.

In operation, the reference complex vector inserting unit 76 inserts a reference complex vector Vrc into the original complex data Vms to produce a reference complex vector inserted data Vmsc. Specifically, the reference complex vector inserting unit 76 assigns plural sub-carriers to the original complex data Vms, and also assigns the reference complex vectors Vrc to predetermined plural sub-carriers. The construction of thus produced reference complex vector inserted data Vmsc is shown in Fig. 5, wherein the reference complex vectors Vrc indicated as three upward arrows, for example, each spaced by plural original complex data Vms assigned to sub-carriers indicated as upright lines on the frequency axis f. The unit 76 outputs every symbol of thus assigned vector Vmsc to the complex multiplier 77.

The complex multiplier 77 performs a complex multiplication of the complex data Vmsc by the reference symbol RS (Sm) fed from the memory 72, and outputs the product Vmcc to the reference symbol inserting unit 71. The reference symbol inserting unit 71 inserts the reference symbol RS into the modulated complex data Vmcc, in a manner previously described with reference to Figs. 2 and 10, to further produce a modulated complex data vmf'. The inverse Fourier transformer 73 and the quadrature modulator 74 also perform the same processes as those in the apparatus MP1 and produces a second base-band data Vmfr' and a second OFDM signal Vmo2, respectively.

Referring to Fig. 4, an OFDM demodulating apparatus according to a third embodiment of the present invention is shown. The OFDM demodulating apparatus DP3 in Fig. 4 has a construction where the apparatus DP1 in Fig. 1 further includes an equalizer 300 connected to the Fourier transformer 19 and a phase compensator 400 connected between the equalizer 300 and the output port Pod. However, the second OFDM signal Vmo2 instead of the first OFDM signal Vmo1 is supplied to the input terminal Pim, and a first reproduced original complex data Vms1 instead of the complex data Vms is output from the output from the Fourier transformer 19 in the demodulating apparatus DP3 according to this embodiment.

The equalizer 300 includes a reference symbol extractor 30, a memory 31, and a complex divider 32 to produce a equalized reproduced data Vmc. The reference symbol extractor 30 extracts reference symbol RSs1 from the first reproduced complex data Vms1 which the memory 31 stores therein. The complex multiplier 30 applies a complex division process to all the reproduced data Vms1 from the transformer 19 with the reference symbol RSs1 stored in the memory 31. As a result, the first reproduce complex data Vms1 is equalized such that components of amplitude phase distortion are removed from the first reproduced complex data Vms1 and such distortion component removed data is output as a transitional reproduced data Vmc. Note that the construction and operation of equalizer 300 are detailedly disclosed in the U.S. Patent No. 5,682,376 entitled as METHOD OF TRANSMITTING ORTHOGOANL FREQUENCY DIVISION MULTIPLEX SIGNAL, AND TRANSMITTER AND RECEIVER EMPLOYED THEREFOR, issued October 28, 1997. Such description is incorporated in this specification by reference.

The phase compensator 400 includes a reference vector extractor 20, a phase calculator 21, a memory 22, a phase error calculator 23, a phase error averaging unit 24, a phase converter 25, and a complex multiplier 26. The reference complex vector extractor 20 is connected to the complex divider 32 of the equalizer 300 for receiving the transitional reproduced data Vmc. The extractor 20 extracts the reference complex data Vrc from the data Vmc to produce an extracted reference complex data signal Vcs indicative of thus extracted reference complex vector Vrc. The phase error calculator 21 is connected to the reference complex extractor 20 for receiving the signal Vcs therefrom for calculating the phase of extracted reference complex vector Vrc.

The memory 22 is provided for previously storing the phase information IPc indicative of the reference complex vector Vrc therein. The phase error calculator 23 is connected to the phase calculator 21 and memory 22 for receiving the phase signal Phc and the phase information IPc, respectively, therefrom. Based on these data Phc and IPc, the phase error calculator 23 calculates the phase error Phec which is a difference in frequency between the complex vector Vrc before and after transmission.

The phase error averaging unit 24 is connected to the phase error calculator 23 for receiving the phase error data Phec therefrom to average the phase difference Phec and obtain an averaged phase difference Phem. The phase convertor 25 is connected to the averaging unit 24 for receiving the averaged phase difference Phem to covert the coordinate system of them into a polar coordinate system and to obtain a phase compensation vector Vhei necessary to compensate the phase error Phem. The complex multiplier 26 is connected to the complex divider 32 of the equalizer 300 for receiving the transitional reproduced data Vmc therefrom and to the phase convertor 25 for receiving the phase compensation vector Vhei therefrom. The complex multiplier 26 performs the complex multiplication of the transitional reproduced data Vmc which is an output from the Fourier transformer 29 and the phase compensation vector Vhei. The multiplier 26 compensates the phase error of the reproduced data Vmc by the compensation vector Vhei, and outputs a product as a second reproduced complex data Vmo2.

Herebellow, the operation of OFDM demodulating apparatus DP3 is described briefly. The residual phase error caused by the noise suppression by the linear approximator 15 is included in all the reproduced vector Vms1 from the Fourier transformer 19. Since the amplitude phase distortion of the OFDM signal Vmo1 occurred in the transmission path is removed by the complex divider 32, a phase shift components due to the nose suppression by approximator 15 still remains in the output Vmc from the complex divider 32.

Referring to Fig. 6, the phase shift of reference complex vector Vrc caused by the residual phase shift is shown. The reference complex vector Vrc that should be originally located on a position Pk rotates on the complex plane by the residual shifting amount and moves to a position P'k. This movement can be estimated by calculating the phase error Phec with the phase error calculator 23. This estimated shift movement Phec is smoothed over plural reference complex vectors by the phase error averaging unit 24.

To compensate the phase shift in all demodulated vectors Vmc, the complex vector for reverse-shifting the averaged phase error Phec is calculated by the phase convertor 25. Specifically, the movement amout between Pk and P'k is averaged, reversed, and then converted into a polar coordinate system, obtaining the compensation vector Vhei. In the case that the phase shit amount is supposed as Pe, the compensation vector Vhei can be expressed by the following equation (8).

$$Vhei = \cos Pe - j \cdot \sin Pe \qquad (8).$$

The complex multiplier 26 performs a complex multiplication of all the reproduced vector Vmc by the phase compensation vector Vhei, and removes the influence of the phase shift. Thus, according to the OFDM transmission system including the OFDM modulating apparatus MP2 and the OFDM demodulating apparatus DP3, the original complex data Vms can be reproduced correctly even if the residual phase shift due to noise suppression by the linear approximation occurs because such phase shift is precisely estimated.

Furthermore, since the reference complex vector Vrc has predetermined value by multiplying the demodulated vector with reference symbol combined with a pseudo random noise signal or frequency sweeping signal, an over-concentration of power to the OFDM signal after the inverse Fourier transformation can be prevented. Additionally, the pseudo random noise signal and the frequency sweeping signal typically including the frequency characteristics on the transmission path. Therefore, application of the pseudo random noise signal or the frequency sweeping signal to the reference symbol enables a precise estimation of transmission path characteristic, and equalization of thereof.

Note that the same reference symbol is commonly used for the multiplication of the demodulated vector and the estimation of the phase error in consideration of securing the transmission efficiency in the above mentioned embodiment. It is needless to say that discrete two reference symbols each having different values can be applied to for respective purpose of the above. The OFDM demodulating apparatus DP3 can compensate the phase error (shift) due to the local oscillating signal even if the phase error detector 100 and frequency error detector 200 are removed therefrom, and the variable frequency oscillator 18 is replaced by a local frequency oscillator. Still further, it is also possible to supply the complex detection signal Vmd1 from the complex multiplier 18c of the apparatus DP3 (Fig. 3) to the Fourier transformer 19.

(Forth Embodiment)

Referring to Fig. 8, an OFDM demodulating apparatus according to the fourth embodiment of the present invention is shown. The OFDM demodulating apparatus DP4 of this example has a construction very similar to that of the apparatus DP3 shown in Fig. 4, but the phase calculator 21, memory 22, phase error calculator 23, phase error averaging unit 24, and the phase covertor 25 therein are replaced with an averaging unit 27, normalizing unit, and complex conjugate calculator 29.

Referring back to Fig. 11, the reference complex vector inserting unit 75 of the OFDM modulating apparatus MP2 assigns plural sub-carriers to the original complex data Vms, and also assigns the reference complex vectors Vrc (A,0) to predetermined plural sub-carriers according to this embodiment. Note that A is a real number except zero. Then, the unit 76 outputs every symbol of thus assigned vector Vmsc to the complex multiplier 77. Thenafter, the operation of OFDM modulating apparatus MP2 is the same as those previously described with reference to Fig. 8.

Referring back again to Fig. 8, the averaging unit 27 is connected to the reference complex vector extractor 20 for receiving the extracted reference vector Vcs to average thereof and produce the averaged reference complex vector Vcm. The normalizing unit 28 is connected to the averaging unit 27 for receiving the averaged vector Vcm to divde the amplitude thereof by A therefrom, and produce a normalized complex vector Vcr. The complex conjugate calculator 29 is connected to the normalizing unit 28 for receiving the normalized complex vector Vcr therefrom to obtain a complex conjugate Vcc. The complex multiplier 26 is connected to both the complex divider 32 and the complex conjugate calculator 29 for receiving the reproduced vector Vmc and the conjugate Vcc, respectively, therefrom to obtain the complex multiple Vms 3 thereof.

Herebellow, the operation of OFDM demodulating apparatus DP4 is described briefly. As described in the above, the demodulated vector Vmc from the complex divider 32 include the residual phase error caused by the noise suppression by the linear approximator 15. Referring to Fig. 7, the phase shift of reference complex vector Vrc caused by the residual phase shift is shown. The reference complex vector Vrc that should be originally located on a position $Pk = (A, 0)$ rotates on the complex plane by the residual shifting amount and moves to a position $P'k = (Xk, Yk)$. To move the shifted phase from the position P k to the original position Pk, it only has to perform a complex multiplication of $P k^{*}=(Xk, -Yk)$ which is a complex conjugate of P K to P k.

This complex conjugate Pk* can be obtained by the following steps. The averaging unit 27 smoothes the extracted reference vector Vcs; the normalizing unit 29 adjust the amplitude thereof by dividing with A; the complex conjugate calculator 29 obtains the complex conjugate Vcc; and the complex multiplier 26 applies the complex multiplication to all demodulated vectors to shift back the phase to the original position. Thus, the phase shift of demodulated vector can be precisely compensated by a simplified construction wherein the phase calculating means 21, 22, 23, 24, and 25 for the apparatus DP3 are not required. Furthermore, setting the reference complex vector as (1, 0), the normalizing unit 28 also can be discarded.

Furthermore, since the reference complex vector Vrc has predetermined value (A, 0) by multiplying the demodulated vector with reference symbol combined with a pseudo random noise signal or frequency sweeping signal, an over-concentration of power to the OFDM signal after the inverse Fourier transformation can be prevented. Additionally, the pseudo random noise signal and the frequency sweeping signal typically including the frequency characteristics on the transmission path. Therefore, application of the pseudo random noise signal or the frequency sweeping signal to the reference symbol enables a precise estimation of transmission path characteristic, and equalization of thereof.

(Fifth Embodiment)

Referring to Fig. 9, an OFDM demodulating apparatus according to the fifth embodiment of the present invention is shown. The OFDM demodulating apparatus DP5 of this example has a construction very similar to that of the apparatus DP4 shown in Fig. 8, but the normalizing unit 28 is removed by setting the reference complex vector as (1,0) therefrom.

It is to be noted that every components of the apparatuses MP1, MP2, DP1, DP2, DP3, DP4, and DP5 according to the above preferred embodiments, expect input ports and output ports, can be constructed as a physical circuitry as well as software.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

**Claims**

1. An OFDM transmission system for communicating an OFDM signal (Vmo1) generated from a first complex vector data (Vms) comprised of predetermined number of data symbols (DS) therein comprising:

   an OFDM modulating means (MP) for generating said OFDM signal (Vmo1) comprised of reference symbol (RS) indicative of phase information inserted therein at a predetermined number (N-1)of symbols (DS); and
   an OFDM demodulating means (DP) for demodulating said OFDM signal (Vmo) based on said inserted reference symbol (RS).

2. An OFDM transmission system as claimed in Claim 1, wherein said OFDM modulating means (MP1) comprising:

   reference symbol storage means (72) for storing said reference symbol (RS);
   reference symbol inserting means (71) for inserting said reference symbol (RS) into every predetermined number (N-1) of said data symbols (DS) to produce a second complex data (Vmf);
   inverse Fourier transformation means (73) for applying the inverse Fourier transforming to said second complex data (Vmf) to produce a base-band OFDM signal (Vmfr);
   first clock means (75) for producing a first clock signal (So) having a predetermined frequency; and
   quadrature modulating means (74) for quadrature modulating said base-ban OFDM signal (Vmfr) with said first clock signal (So) to produce the OFDM signal (Vmo1).

3. An OFDM transmission system as claimed in Claim 2, wherein said OFDM demodulating means (DP1) comprising:

   quadrature detection means (11) for detecting the OFDM signal (Vmo1) to produce a detected OFDM signal (Vmd1);
   first reference symbol extracting means (12) for extracting said inserted reference symbol (RSd1) from said quadrature detected OFDM signal (Vdm1);
   phase calculating means (13) for calculating the phase difference (Ph) of said extracted reference symbol (RSd1);
   phase error calculating means (14) for calculating the phase error (Phe) between said extracted reference symbol (RSd1) and said inserted reference symbol (RS) based on said extracted reference symbol (RSd1);
   linear approximating means (15) for linear approximating said phase error (Phe) to calculate a gradient (Ga) of said approximated line;
   frequency error calculating means (16) for calculating a frequency error (Fe) between said OFDM signal (Vmo1) and said quadrature detected OFDM signal (Vmd1) based on said gradient (Ga); and
   variable frequency oscillating means (18) for producing a second clock signal (Sov) having a frequency variable according to said frequency error (Fe).

4. An OFDM transmission system as claimed in Claim 3, wherein said OFDM demodulating means (DP2) further comprising:

   complex multiplying means (18c) for complex multiplying said detected OFDM singal (Vmd1 ) by said second clock signal (Sov2).

5. An OFDM transmission system as claimed in Claim 3, wherein said phase error calculating means (14) comprising :

   store means (14a) for storing said inserted reference symbol (RS: IPm); and
   subtracting means (14b) for making a subtraction of said inserted reference symbol (RS: Ipm) stored in said store means (14a) and said extracted reference symbol (RSd1; Ph).

6. An OFDM transmission system as claimed in Claim 3, wherein said reference symbol (RSd1) is a pseudo noise signal.

7. An OFDM transmission system as claimed in Claim 3, wherein said reference symbol (RSd1) is a frequency sweeping signal.

8. An OFDM transmission system as claimed in Claim 3, wherein said reference symbol (RSd1) has a predetermined phase.

9. An OFDM transmission system as claimed in Claim 3, wherein said reference symbol (RSd1) is a single-carrier signal.

10. An OFDM transmission system as claimed in Claim 2, further comprising frequency error processing means (17) for processing said frequency error (Fe) to smooth thereof.

11. An OFDM transmission system as claimed in Claim 11, wherein said frequency error processing means (17) smoothes said frequency error (Fe) over plural frames.

12. An OFDM transmission system as claimed in Claim 10, wherein said frequency error processing means (17) controls the frequency of said first clock signal (Sov) variablly according to a sign of said frequency error (Fe).

13. An OFDM transmission system as claimed in Claim 10, wherein said frequency error processing means (17) comprises an amplifying means for increasing said frequency error (Fe) and controlling the frequency of said frequency error (Fe) based on said increased frequency error (Fes).

14. An OFDM transmission system as claimed in Claim 2, wherein said OFDM modulating means (MP2) further comprising:

    reference complex vector inserting means (76) for a reference complex vector (Vrc) to predetermined sub-carrier, and complex vector of modulated data (Vms) to other sub-carriers within each data symbol (DS).

15. An OFDM transmission system as claimed in Claim 14, wherein said demodulating means (DP3) further comprising:

    quadrature detecting means (11) for quadrature detecting said OFDM signal (Vmo1) whose all reference symbols (RS) being complex multiplied to complex vectors of sub-carrier to produce a complex detected signal (Vmd1) according to an output of a frequency oscillating means (18);
    Fourier transforming means (19) for converting every symbol of said complex detected signal (Vmd1) in a time domain into a complex vector (Vms1) of modulated data of each sub-carrier;
    reference symbol extracting means (30) for extracting said reference symbol (RSs1) from said complex vector (Vmsl);
    reference symbol storage means (31) for storing extracted reference symbol (RSs1)
    complex dividing means (32) for complex dividing said complex vector (Vms1) by said extracted reference symbol (RSs1) to produce a demodulated vector (Vmc);
    reference complex vector extracting means (20) for extracting reference complex vector (Vcs) from said demodulated vector (Vmd);
    reference complex vector storage means (22) for storing the phase (IPC) of reference complex vector for predetermined sub-carrier on the transmitting side;
    phase error calculating means (21) for calculating phase error (Phec) between said extracted reference complex vector (Vcs) and said stored phase (IPC);
    averaging means (24) for averaging said calculated phase error (Phec) to obtain averaged phase error (Phem);
    phase shifting means (25) for obtaining a phase sifting vector (Vhei) based on said averaged phase error (Phem); and
    complex multiplying means (26) for complex multiplying said demodulated vector (Vmd) and said phase shifting vector (Vhei).

16. An OFDM transmission system as claimed in Claim 14, said frequency oscillating means (18b) produces a clock signal having variable frequency.

17. An OFDM transmission system as claimed in Claim 14, wherein said predetermined sub-carrier is assigned with a reference complex vector (A, 0), said A being a real number not zero.

**18.** An OFDM transmission system as claimed in Claim 17, wherein said demodulating means (DP4) further comprising:

quadrature detecting means (11) for quadrature detecting said OFDM signal (Vmo1) whose all reference symbols (RS) being complex multiplied to complex vectors of sub-carrier to produce a complex detected signal (Vmd1) according to an output of a frequency oscillating means (18);
Fourier transforming means (19) for converting every symbol of said complex detected signal (Vmd1) in a time domain into a complex vector (Vms1) of modulated data of each sub-carrier;
reference symbol extracting means (30) for extracting said reference symbol (RSs1) from said complex vector (Vmsl);
reference symbol storage means (31) for storing extracted reference symbol (RSs1)
complex dividing means (32) for complex dividing said complex vector (Vms1) by said extracted reference symbol (RSs1) to produce a demodulated vector (Vmc);
reference complex vector extracting means (20) for extracting reference complex vector (Vcs) from said demodulated vector (Vmd);
averaging means (27) for averaging said extracted reference complex vector (Vcs) to produce an averaged extracted reference complex vector (Vcm);
normalizing means (28) for normalizing said averaged extracted reference complex vector (Vcm) to produce a normalized reference complex vector (Vcr);
complex conjugate calculating means (29) for calculating a complex conjugate of said normalized reference complex vector (Vcr) to produce a complex conjugate Vcc; and
complex multiplying means (26) for complex multiplying said demodulated vector (Vmc) and said complex conjugate (Vcc).

**19.** An OFDM transmission system as claimed in Claim 18, wherein said frequency oscillating means (18b) produces a clock signal having variable frequency.

**20.** An OFDM transmission system as claimed in Claim 17, wherein said A is one.

F I G. 1

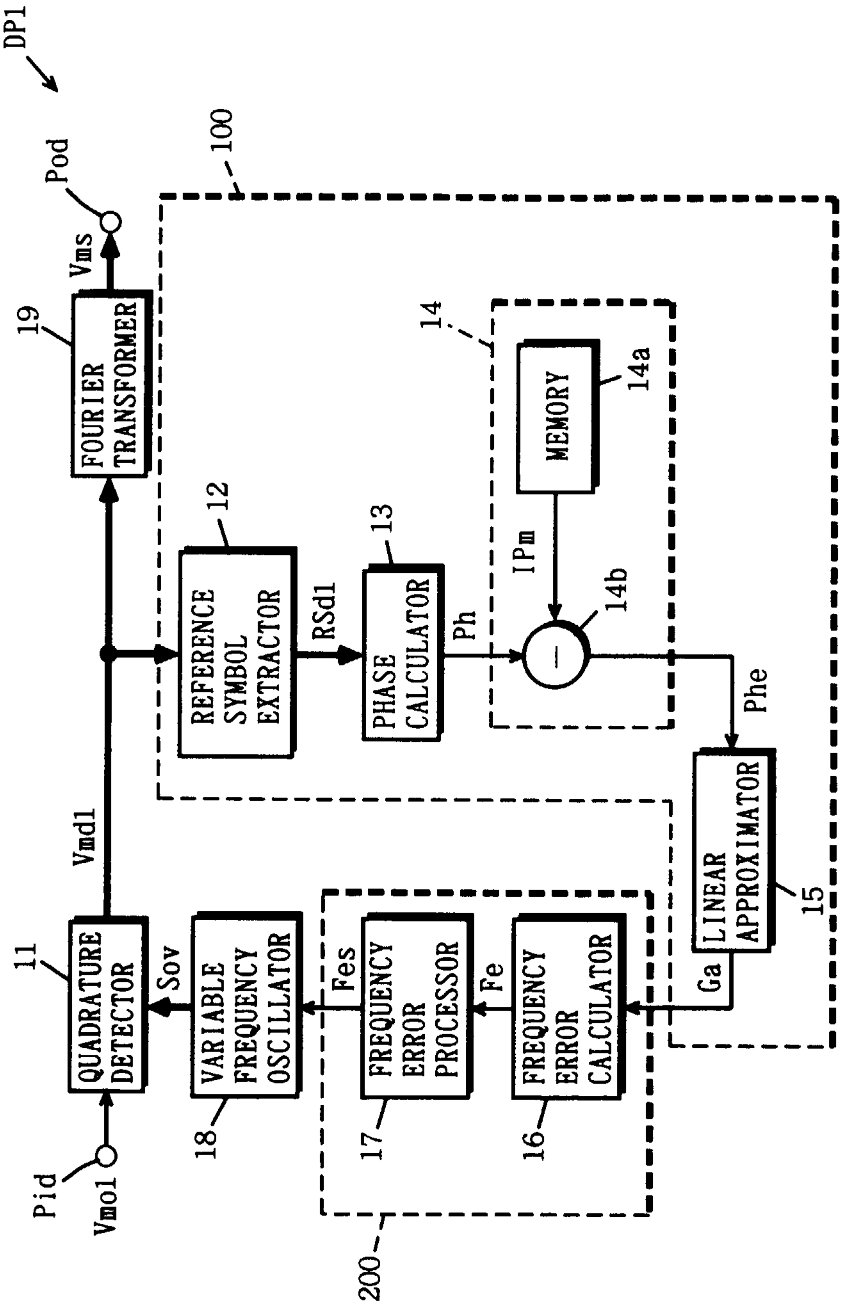
DP1
100
Pod
Vms
19
FOURIER TRANSFORMER
14
MEMORY
14a
12
REFERENCE SYMBOL EXTRACTOR
13
PHASE CALCULATOR
RSd1
Ph
IPm
14b
Phe
Vmd1
LINEAR APPROXIMATOR
15
11
QUADRATURE DETECTOR
Sov
VARIABLE FREQUENCY OSCILLATOR
Fes
FREQUENCY ERROR PROCESSOR
Fe
FREQUENCY ERROR CALCULATOR
Ga
18
17
16
Pid
Vmo1
200

FIG. 2

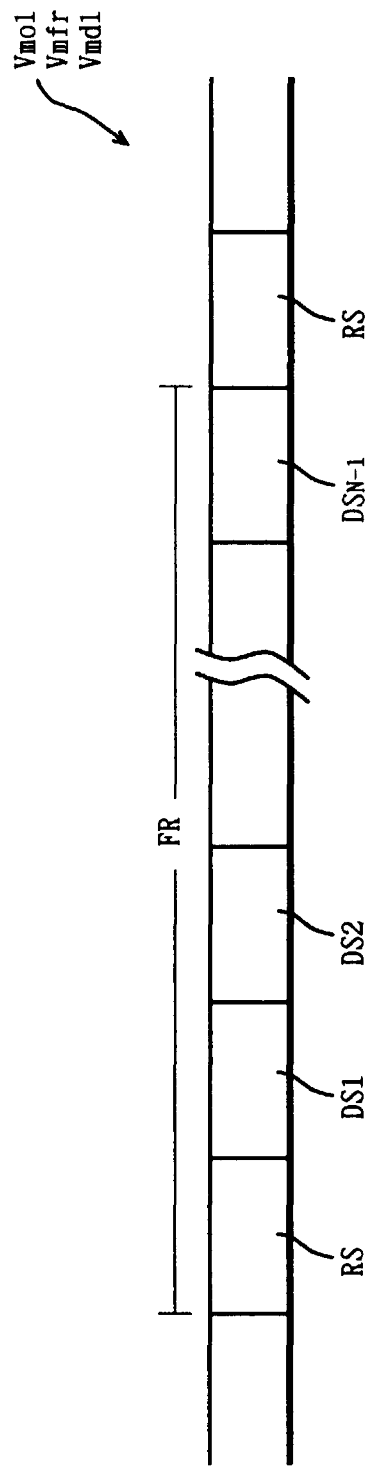

FIG. 3

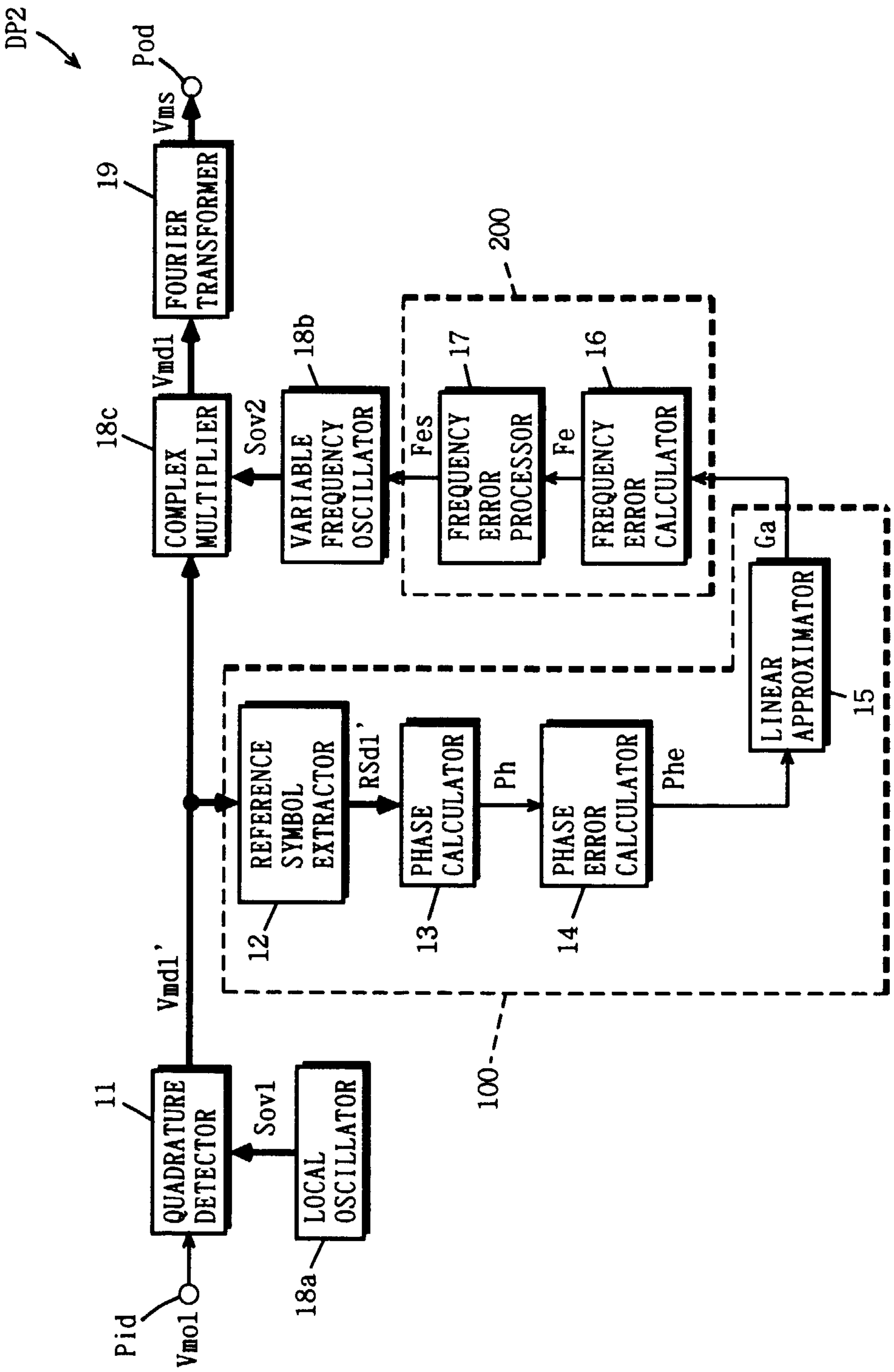
DP2
Pid
Vmo1
QUADRATURE DETECTOR
11
Sov1
LOCAL OSCILLATOR
18a
Vmd1'
REFERENCE SYMBOL EXTRACTOR
12
RSd1'
PHASE CALCULATOR
13
Ph
PHASE ERROR CALCULATOR
14
Phe
LINEAR APPROXIMATOR
15
Ga
100
COMPLEX MULTIPLIER
18c
Sov2
VARIABLE FREQUENCY OSCILLATOR
18b
Fes
FREQUENCY ERROR PROCESSOR
17
Fe
FREQUENCY ERROR CALCULATOR
16
200
Vmd1
FOURIER TRANSFORMER
19
Vms
Pod

F I G. 4

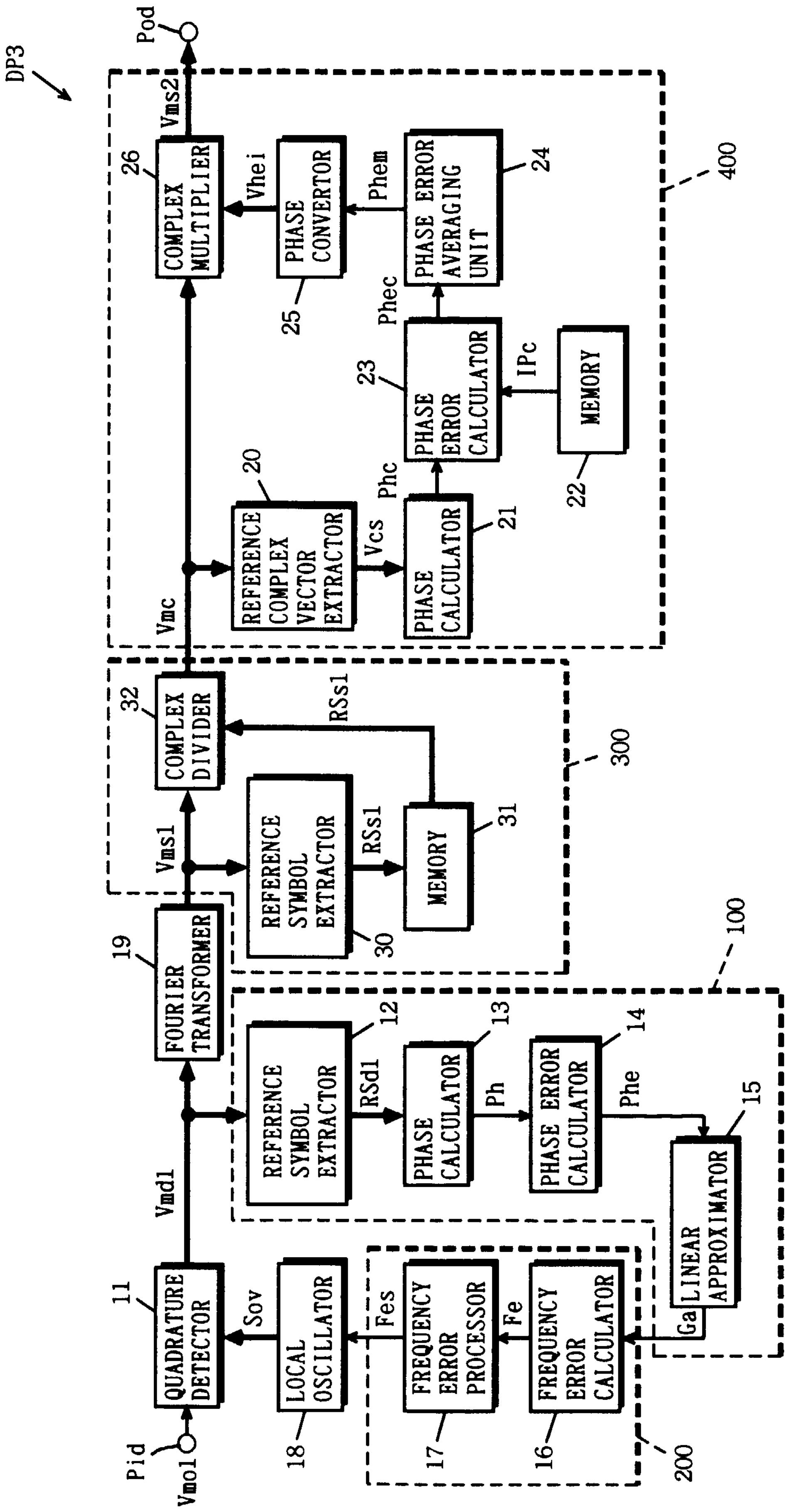
DP3
Pid
Vmo1
QUADRATURE DETECTOR
11
Sov
LOCAL OSCILLATOR
18
Fes
FREQUENCY ERROR PROCESSOR
17
Fe
FREQUENCY ERROR CALCULATOR
16
200
Ga
LINEAR APPROXIMATOR
15
Vmd1
REFERENCE SYMBOL EXTRACTOR
12
RSd1
PHASE CALCULATOR
13
Ph
PHASE ERROR CALCULATOR
14
Phe
100
FOURIER TRANSFORMER
19
Vms1
REFERENCE SYMBOL EXTRACTOR
30
RSs1
MEMORY
31
COMPLEX DIVIDER
32
RSs1
300
Vmc
REFERENCE COMPLEX VECTOR EXTRACTOR
20
Vcs
PHASE CALCULATOR
21
Phc
PHASE ERROR CALCULATOR
23
IPc
MEMORY
22
Phec
PHASE ERROR AVERAGING UNIT
24
Phem
PHASE CONVERTOR
25
Vhei
COMPLEX MULTIPLIER
26
Vms2
Pod
400

FIG. 5

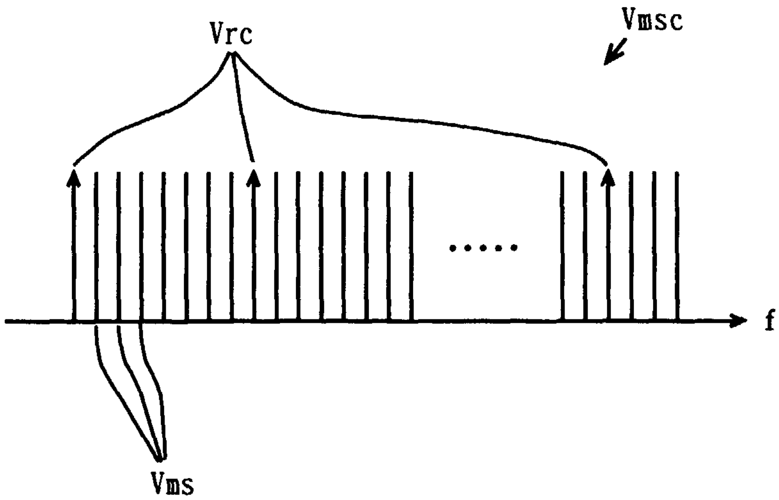


FIG. 6

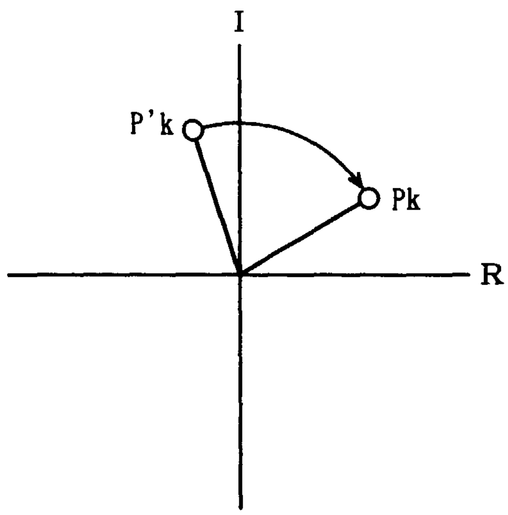


FIG. 7

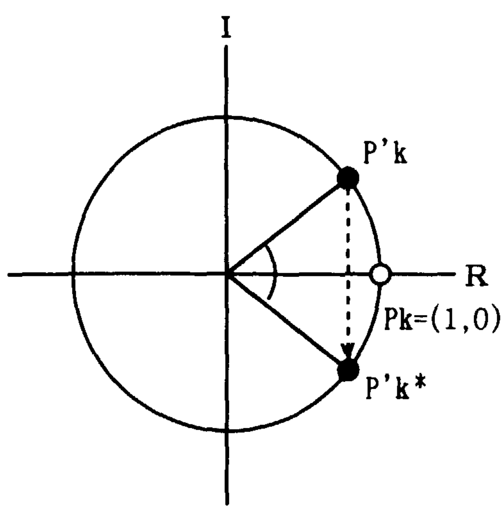

F I G. 8

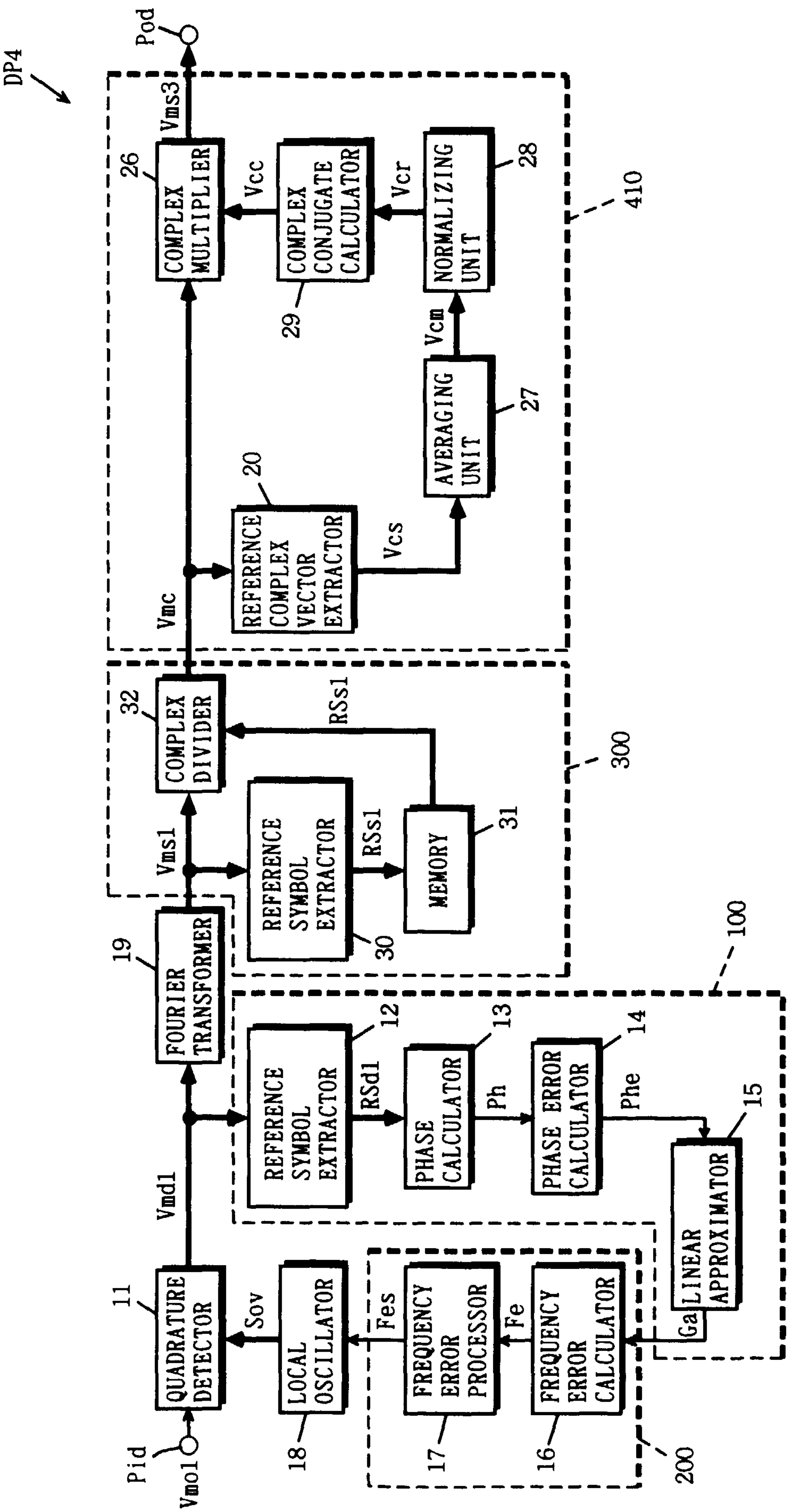
DP4
Pod
Vms3
26
COMPLEX MULTIPLIER
Vcc
COMPLEX CONJUGATE CALCULATOR
29
Vcr
NORMALIZING UNIT
28
410
Vcm
AVERAGING UNIT
27
REFERENCE COMPLEX VECTOR EXTRACTOR
20
Vcs
Vmc
32
COMPLEX DIVIDER
RSs1
300
Vms1
REFERENCE SYMBOL EXTRACTOR
RSs1
MEMORY
31
30
19
FOURIER TRANSFORMER
100
REFERENCE SYMBOL EXTRACTOR
12
RSd1
PHASE CALCULATOR
13
Ph
PHASE ERROR CALCULATOR
14
Phe
LINEAR APPROXIMATOR
15
Vmd1
11
QUADRATURE DETECTOR
Sov
LOCAL OSCILLATOR
18
Fes
FREQUENCY ERROR PROCESSOR
17
Fe
FREQUENCY ERROR CALCULATOR
16
Ga
200
Pid
Vmo1

FIG. 9

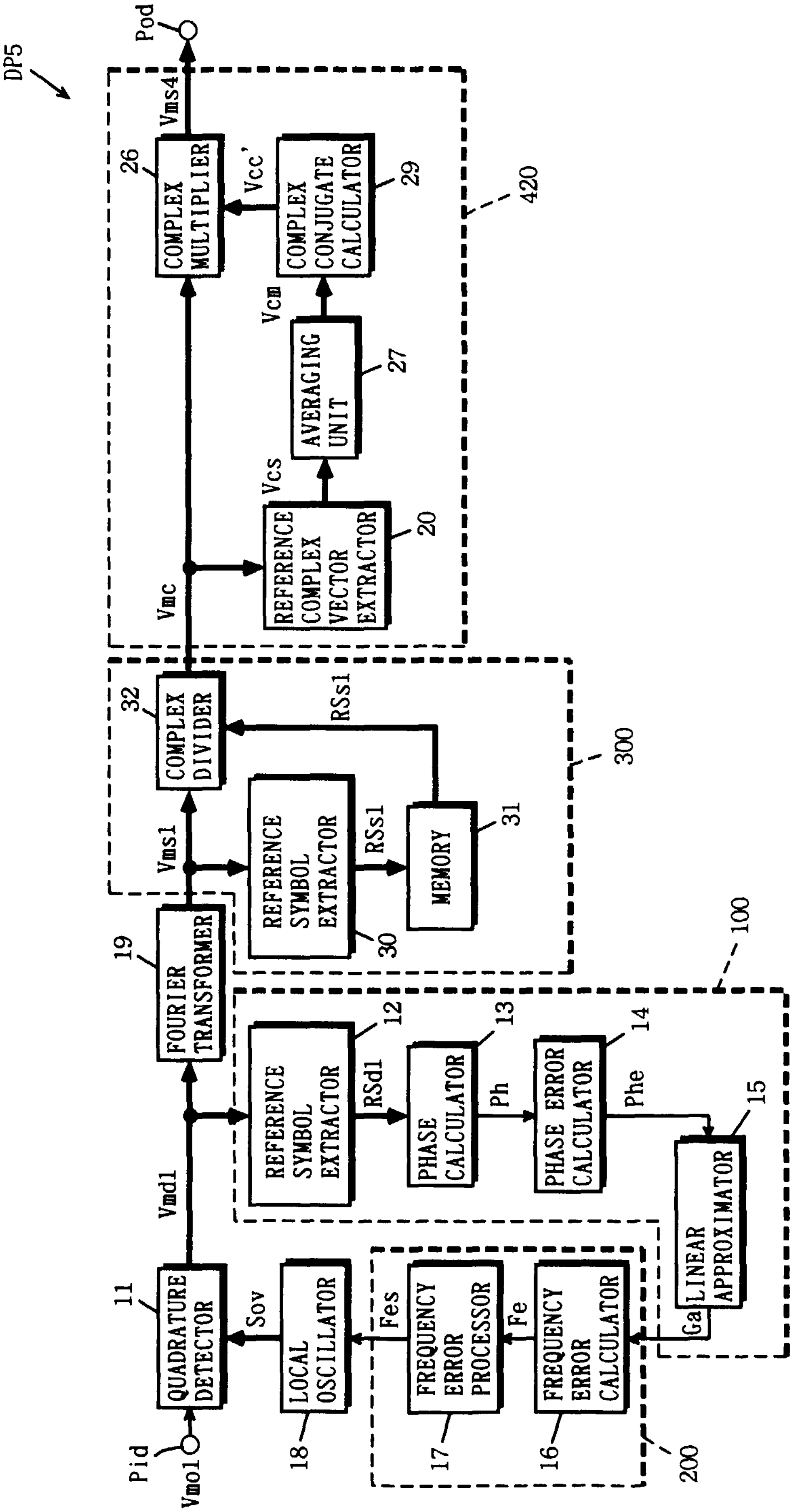
DP5
Pid
Vmo1
QUADRATURE DETECTOR
11
Vmd1
FOURIER TRANSFORMER
19
Vms1
COMPLEX DIVIDER
32
Vmc
COMPLEX MULTIPLIER
26
Vms4
Pod
REFERENCE COMPLEX VECTOR EXTRACTOR
20
Vcs
AVERAGING UNIT
27
Vcm
COMPLEX CONJUGATE CALCULATOR
29
Vcc'
420
REFERENCE SYMBOL EXTRACTOR
30
RSs1
MEMORY
31
300
REFERENCE SYMBOL EXTRACTOR
12
RSd1
PHASE CALCULATOR
13
Ph
PHASE ERROR CALCULATOR
14
Phe
LINEAR APPROXIMATOR
15
Ga
100
LOCAL OSCILLATOR
18
Sov
FREQUENCY ERROR PROCESSOR
17
Fes
FREQUENCY ERROR CALCULATOR
16
Fe
200

FIG. 10

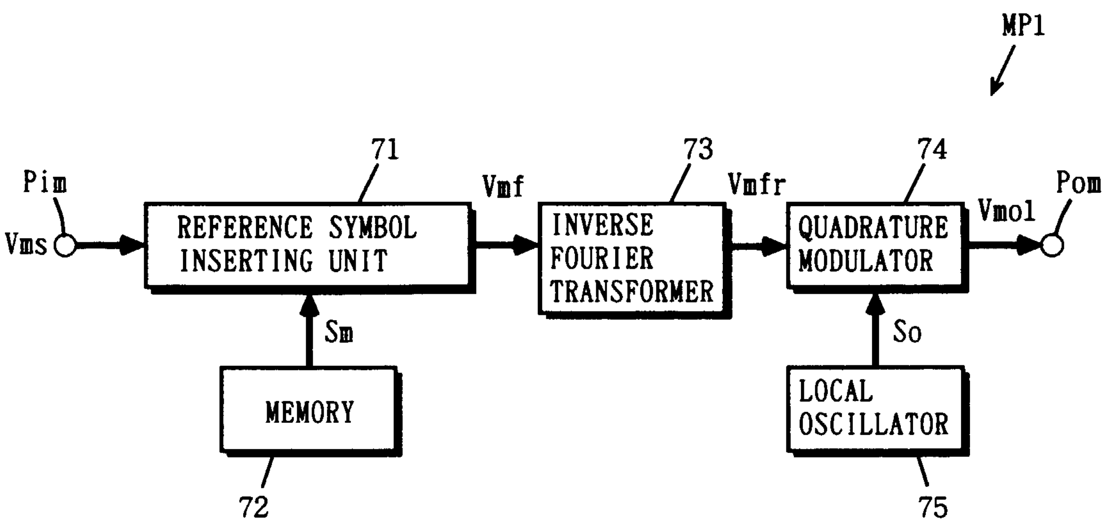
MP1
71
73
74
Pim
Vmf
Vmfr
Pom
Vms
REFERENCE SYMBOL INSERTING UNIT
INVERSE FOURIER TRANSFORMER
QUADRATURE MODULATOR
Vmol
Sm
So
MEMORY
LOCAL OSCILLATOR
72
75

F I G. 11

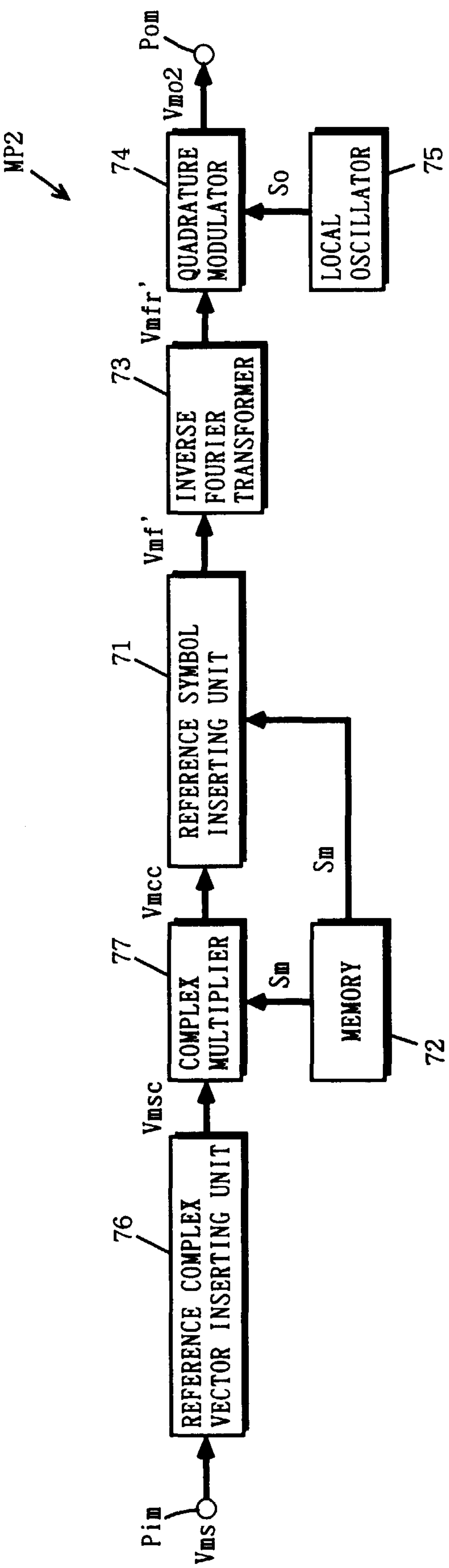
MP2
Pim
Vms
REFERENCE COMPLEX VECTOR INSERTING UNIT
76
Vmsc
COMPLEX MULTIPLIER
77
Sm
MEMORY
72
Vmcc
Sm
REFERENCE SYMBOL INSERTING UNIT
71
Vmf'
INVERSE FOURIER TRANSFORMER
73
Vmfr'
QUADRATURE MODULATOR
74
So
LOCAL OSCILLATOR
75
Vmo2
Pom

FIG. 12

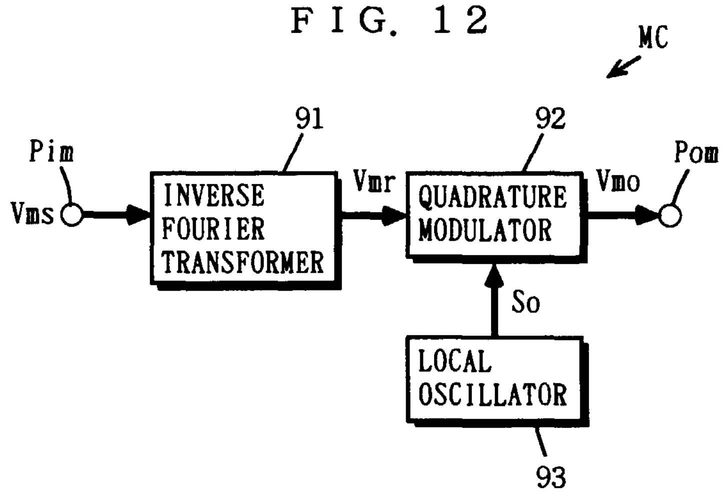
MC
91
92
Pim
Pom
Vms
INVERSE FOURIER TRANSFORMER
Vmr
QUADRATURE MODULATOR
Vmo
So
LOCAL OSCILLATOR
93

FIG. 13

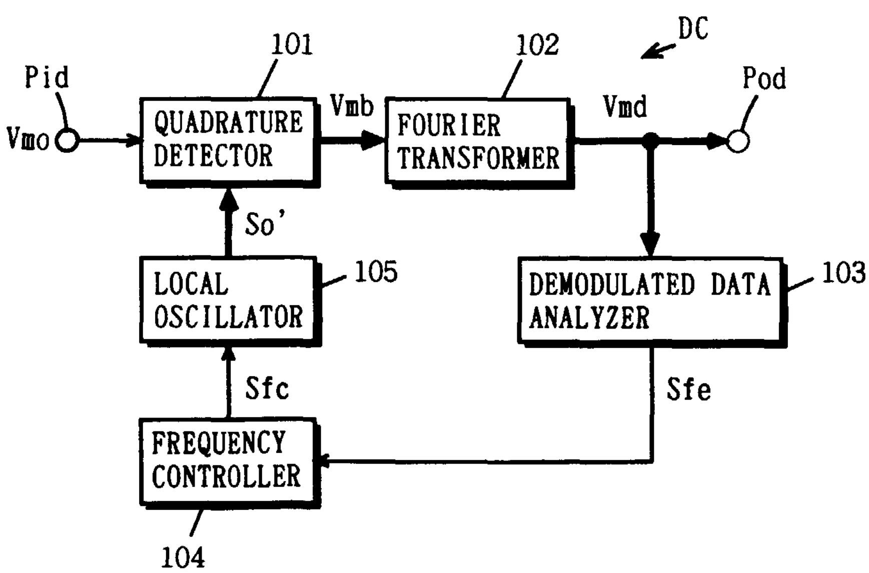
DC
101
102
Pid
Pod
Vmo
QUADRATURE DETECTOR
Vmb
FOURIER TRANSFORMER
Vmd
So'
LOCAL OSCILLATOR
105
DEMODULATED DATA ANALYZER
103
Sfc
Sfe
FREQUENCY CONTROLLER
104